(19) Europäisches Patentamt
European Patent Office
Office européen des brevets

(11) **EP 1 688 009 B1**

(12) **EUROPÄISCHE PATENTSCHRIFT**

(45) Veröffentlichungstag und Bekanntmachung des Hinweises auf die Patenterteilung:
**03.07.2013   Patentblatt 2013/27**

(21) Anmeldenummer: 04766632.6

(22) Anmeldetag: **27.08.2004**

(51) Int Cl.:
**H04W 64/00** (2009.01)

(86) Internationale Anmeldenummer:
**PCT/EP2004/051949**

(87) Internationale Veröffentlichungsnummer:
**WO 2005/034557 (14.04.2005 Gazette 2005/15)**

(54) **VERFAHREN ZUR ERMITTLUNG DER ORTSPOSITION MINDESTENS EINES MOBILEN FUNKKOMMUNIKATIONSGERÄTS ANHAND BEKANNTER ORTSPOSITIONEN BENACHBARTER FUNKKOMMUNIKATIONSGERÄTE, ZUGEHÖRIGES FUNKKOMMUNIKATIONSGERÄT SOWIE FUNKKOMMUNIKATIONSSYSTEM**

METHOD FOR DETERMINING THE LOCAL POSITION OF AT LEAST ONE MOBILE RADIO COMMUNICATION DEVICE BASED ON KNOWN LOCAL POSITIONS OF ADJACENT RADIO COMMUNICATION DEVICES, ASSOCIATED RADIO COMMUNICATION DEVICE, AND RADIO COMMUNICATION SYSTEM

PROCEDE DE DETERMINATION DE LA POSITION D'AU MOINS UN APPAREIL DE COMMUNICATION RADIO MOBILE SUR LA BASE DE POSITIONS CONNUES D'APPAREILS DE COMMUNICATION RADIO VOISINS, APPAREIL DE COMMUNICATION RADIO CORRESPONDANT ET SYSTEME DE COMMUNICATION RADIO

(84) Benannte Vertragsstaaten:
**DE FR GB IT**

(30) Priorität: **30.09.2003   DE 10345511**

(43) Veröffentlichungstag der Anmeldung:
**09.08.2006   Patentblatt 2006/32**

(73) Patentinhaber: **Intel Mobile Communications GmbH**
**85579 Neubiberg (DE)**

(72) Erfinder:
• **BIENAS, Maik**
  **30519 Hannover (DE)**
• **GOTTSCHALK, Thomas**
  **12524 Berlin (DE)**
• **SCHWAGMANN, Norbert**
  **38102 Braunschweig (DE)**

(74) Vertreter: **Viering, Jentschura & Partner**
**Am Brauhaus 8**
**01099 Dresden (DE)**

(56) Entgegenhaltungen:
**EP-A- 1 148 754      EP-A- 1 206 152**
**EP-A- 1 243 941      WO-A-01/58098**
**WO-A-02/078382**

• **VODAFONE: "Introduction of LCS QoS Class" 3GPP TSG-SA2 MEETING 34, TDOC S2-032977, [Online] 18. August 2003 (2003-08-18), - 22. August 2003 (2003-08-22) Seite 1-27, XP002311151 Gefunden im Internet: URL:http://www.3gpp.org/ftp/tsg_sa/WG2_Arc h/TSGS2_34_Brussels/tdocs/S2-032977.zip> [gefunden am 2004-12-16]**

**Beschreibung**

In Funkkommunikationssystemen, insbesondere Mobilfunknetzen wie z.B. nach dem UMTS-Standard (Universal Mobile Telecommunications System), kann die Ortsposition eines mobilen Funkkommunikationsgeräts bestimmt werden, indem ein oder mehrere Laufzeiten oder Laufzeitdifferenzen von Messsignalen zwischen der Basisstation in der Aufenthaltsfunkzelle des zu ortenden Funkkommunikationsgeräts und/oder zwischen ein oder mehreren Basisstationen in Nachbarfunkzellen zur Aufenthaltsfunkzelle und dem jeweilig zu ortenden Funkkommunikationsgerät gemessen werden. Aus dem gemessenen Messsignal-Laufzeiten sowie den bekannten Positionsdaten der Basisstationen kann dann die Ortsposition des zu ortenden Funkkommunikationsgeräts berechnet werden. Diese Art der Positionsbestimmung ist luftschnittstellenbasiert, da die nötigen Signal-Messungen auf der vorhandenen Luftschnittstelle des jeweiligen zu ortenden Funkkommunikationsgeräts vorgenommen werden.

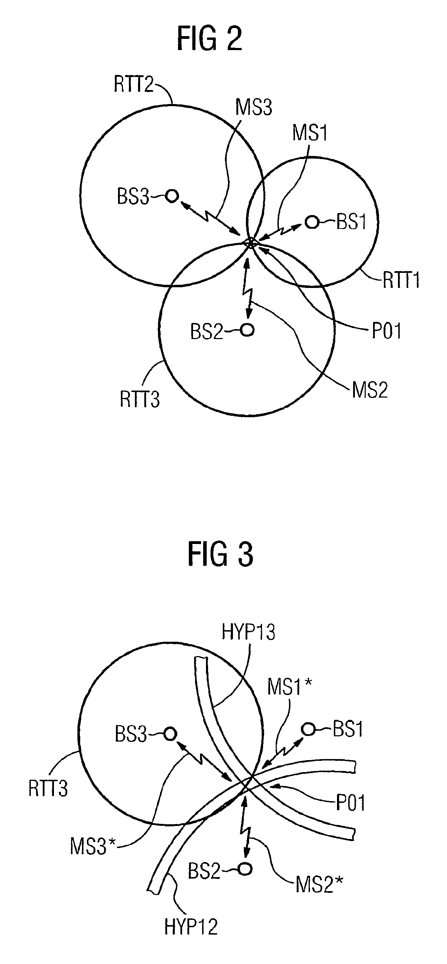

Ein bekanntes Ortungsmessverfahren ist insbesondere die sogenannte RTT-Messung (Round Trip Time). Diese wird anhand der Figur 2 vom Prinzip her schematisch erläutert. Dort sind die Positionen von drei Basisstationen BS1, BS2, BS3 jeweils mit einem Kreis eingezeichnet. Diese empfangen Funkmesssignale MS1, MS2, MS3 über die Luftschnittstelle eines zu ortenden Funkkommunikationsgeräts, das sich an der Position PO1 aufhält. Aus der Laufzeit des jeweiligen Messsignals MS1, MS2, MS3 kann die jeweilige Basisstation BS1, BS2, BS3 ihre jeweilige Entfernung zum zu ortenden Funk kommunikationsgerät bestimmen. Die Laufzeit des jeweiligen Messsignals lässt sich z.B. dadurch ermitteln, dass die Zeitdifferenz zwischen Startzeitpunkt und Empfangszeitpunkt des Messsignals in der jeweiligen Basisstation gebildet wird. Der Startzeitpunkt des jeweiligen Messsignals kann dabei diesem als Parameter mitgeschickt werden, so dass er der Basisstation bekannt gemacht wird. Die ermittelte Differenz zwischen dem Startzeitpunkt und dem Empfangszeitpunkt des jeweiligen Messsignals entspricht dann einem Entfernungskreis um die jeweilige Basisstation herum, der die mögliche örtliche Lage des zu ortenden Funkkommunikationsgeräts wiedergibt. Bei den drei Laufzeitmessungen von Figur 2 ergeben sich drei Entfernungskreise RTT1, RTT2, RTT3 mit einem gemeinsamen Schnittpunkt, der die örtliche Lage bzw. Ortsposition PO1 des zu ortenden Funkkommunikationsgeräts angibt.

Ein weiteres Messverfahren ist die sog. OTDOA-Methode (Observed Time Difference of Arrival). Dabei wird die Laufzeitdifferenz zweier Messsignale im zu ortenden Funkkommunikationsgerät ermittelt, die von mindestens zwei benachbarten Basisstationen abgestrahlt werden. Da die Ortspositionen der Basisstationen bekannt ist, lässt sich aus der gemessenen Laufzeitdifferenz ein Hyperboloid als Ortskurve konstanter Entfernung von den zwei bekannten Ortspositionen der beiden Basisstationen aufstellen. Vorzugsweise werden dabei mindestens zwei Laufzeitdifferenzmessungen durchgeführt. Dies ist in der Figur 3 veranschaulicht. Dort wird die Differenz zwischen den Laufzeiten der Messsignale MS1*, MS2*, die von den beiden Basisstationen BS1, BS2 abgeschickt werden, mithilfe des zu ortenden Funkkommunikationsgeräts gemessen. Diese erste Laufzeitmessung ergibt zusammen mit den bekannten Ortspositionen der beiden Basisstationen BS1, BS2 einen ersten Hyperboloiden HYP12 als möglicher Aufenthaltsort des Funkkommunikationsgeräts. In entsprechender Weise wird die Differenz zwischen den Laufzeit der Messsignale MS1*, MS3* der beiden Basisstationen BS1, BS3 gemessen und zusammen mit den bekannten Ortspositionen dieser beiden Basisstationen BS1, BS3 ein zweiter Hyperboloid HYP13 bestimmt. Mithilfe des Messsignals MS3* wird noch ein Entfernungskreis RTT3 nach der RTT-Methode ermittelt. Somit ergibt sich ein eindeutiger Schnittpunkt für die drei Ortsmesskurven HYP12, HYP13, RTT3 und damit der Aufenthaltsort PO1 des zu ortenden Funkkommunikationsgeräts.

Bei diesen bekannten Luftschnittstellen-basierten Positionsbestimmungen erhält die Genauigkeit der berechneten Position von vielen Faktoren ab. Prinzipiell gilt aber tendenziell: Je mehr Entfernungs-Kreise (ein Entfernungskreis wird durch eine bekannte Ortsposition und einer Signallaufzeit definiert, siehe Figur 2) und/oder Hyperboloiden (ein Hyperboloid wird durch zwei Ortspositionen und der Differenz zwischen zwei Signallaufzeiten definiert, siehe Figur 3) zur Berechnung der Position des jeweilig zu ortenden Funkkommunikationsgeräts zur Verfügung stehen, desto genauer kann dessen Position ermittelt werden.

In Druckschrift WO 02/078382 A1 ist ein System zur Positionierungsbestimmung von Mobilfunkendgeräten offenbart, welche jeweils ein kurzreichweitiges Drahtloskommunikationsmittel zur Kommunikation mit anderen Mobilfunkendgeräten und ein langreichweitiges Drahtloskommunikationsmittel zur Kommunikation mit Ortsbestimmungseinrichtungen aufweisen. Die Position in einem Mobilfunkendgerät wird dabei aus ersten und zweiten Ortsbestimmungs-Informationen errechnet, welche von einer der Ortsbestimmungseinrichtungen bzw. von einem anderen Mobilfunkendgerät erhalten werden.

In Druckschrift EP 1 148 754 A2 wird ein Verfahren zum Betreiben eines Mobilfunkgerätes beschrieben, wobei in Antwort auf eine Übermittlung einer ersten Nachricht von einem ersten Mobilfunkgerät an ein zweites Mobilfunkgerät das zweite Mobilfunkgerät eine zweite Nachricht, welche Positionsdaten, beispielsweise GPS-basierte Daten, bezüglich des Standpunktes des zweiten Mobilfunkgerätes enthält, an das erste Mobilfunkgerät übermittelt. Es werden darauf basierend einem Benutzer des ersten Mobilfunkgerätes Nachrichten angezeigt, welche ihn in die Lage versetzen, einen Abstand zwischen der Position des ersten Mobilfunkgerätes und des zweiten Mobilfunkgerätes, ggfs. bis auf Null, zu verringern.

Im Dokument "Introduction of LCS QoS Class" (Vodafone UK, TDoc S2-032977, Seiten 1 - 27) vom 3GPP TSG-SA2 Meeting 34 vom 18 - 23 August 2003 ist ein neues Konzept bezüglich Dienstqualitätsklassen (QoS - Quality of Services) für LCS (Radio Resource Location Services - Funkressourcenortungsdienste) beschrieben, im Zuge dessen neue Dienstleistungsklassen eingeführt werden, welche eine Ortsbestimmung trotz geringer Genauigkeit oder längeren Antwortzeiten ermöglichen.

Der Erfindung liegt die Aufgabe zugrunde, ein weiter verbessertes Positionsermittlungsverfahren für ein zu ortendes, mobiles Funkkommunikationsgerät bereitzustellen. Diese Aufgabe wird durch folgendes erfindungsgemäße Verfahren gelöst: Zur Ermittlung der Ortsposition mindestens eines zu ortenden mobilen Funkkommunikationsgeräts in mindestens einer Funkzelle eines Funkkommunikationssystems wird in einem ersten Schritt von dem zu ortenden Funkkommunikationsgerät ein Anfragesignal abgestrahlt, mit dem ein oder mehrere weitere mobile Funkkommunikationsgeräte in seiner Umgebung aufgefordert werden, ihm zunächst ihre Bereitschaft zur Teilnahme an einer Positionsermittlung jeweils durch Zurücksenden eines spezifischen Bestätigungssignal anzuzeigen, dann in einem nachfolgenden, zweiten Schritt nach dem Empfang des jeweiligen Bestätigungssignals wird von dem zu ortenden Funkkommunikationsgerät ein Abrufsignal zum Abrufen von Positionsinformationen jeweils an dasjenige, weitere Funkkommunikationsgerät übertragen, von dem dessen Bereitschaft zur Teilnahme an der Positionsermittlung auf das Anfragesignal hin mit einem spezifischen Bestätigungssignal angezeigt worden ist, von dem mindestens einem weiteren mobilen Funkkommunikationsgerät, das sich in derselben oder einer anderen Funkzelle wie das zu ortende Funkkommunikationsgerät aufhält und dem seine aktuelle Ortsposition ihm selbst oder dem Funknetzwerk des Funkkommunikationssystems bekannt ist, werden Positionsinformationen mittels einer oder mehrerer Funkinformationssignale über eine direkte Funkverbindung zum zu ortenden Funkkommunikationsgerät, oder über eine indirekte Funkverbindung unter Zuhilfenahme des Funknetzwerks an das zu ortende Funkkommunikationsgerät übermittelt.

Dadurch, dass Positionsinformationen mittels ein oder mehrerer Funkinformationssignale von mindestens einem weiteren mobilen Funkkommunikationsgerät an das jeweilig zu ortende Funkkommunikationsgerät über eine direkte Funkverbindung, oder über eine indirekte Funkverbindung unter Zwischenschaltung des Funknetzwerkes übermittelt werden, kann bereits allein darauf basierend eine Ortsbestimmung für das zu ortende Funkkommunikationsgerät durchgeführt werden. In vorteilhafter Weise können die übermittelten Positionsinformationen zumindest als Zusatzinformation mit in die Bestimmung der Ortsposition aufgrund anderer Messverfahren wie z.B. nach dem RTT-Messverfahren, dem OTTOA-Messverfahren, und/oder GPS-(Global Positioning System) Messverfahren eingehen. Auf diese Weise lässt sich der aktuelle Standort des jeweilig zu ortenden Funkkommunikationsgeräts verbessert ermitteln. Mit anderen Worten ausgedrückt werden fremde, mobile Funkkommunikationsgeräte, deren Standort jeweils bekannt ist, dazu benutzt, Positionsinformationen über den örtlichen Bezug bzw. die örtliche Relation zwischen dem zu ortenden Funkkommunikationsgerät und diesen weiteren mobilen Funkkommunikationsgeräten zu gewinnen. Vorteilhaft ist weiterhin, dass ein geringer Energie- bedarf mit dem Verfahren einhergeht. Durch den Einsatz des Verfahrens können die Nachteile der IPDL-OTDOA-Methode (Funk-pausen) umgangen werden.

Die Erfindung betrifft auch ein Funkkommunikationsgerät mit mindestens einer Abfrageeinheit zum Anfordern von Information über eine Bereitschaft von mindestens einem weiteren mobilen Funkkommunikationsgerät zur Teilnahme an einer Positionsermittlung durch Zurücksenden eines Bestätigungssignals und zum Anfordern von Positionsinformationen von mindestens einem weiteren mobilen Funkkommunikationsgerät, das sich in derselben oder einer anderen Funkzelle eines Funkkommunikationssystems aufhält und dem seine aktuelle Ortsposition ihm selbst oder dem Funknetzwerk des Funkkommunikationssystems bekannt ist, und mit einer Empfangseinheit zum Empfang und Auswerten von dem Bestätigungssignal und von ein oder mehreren Funkinformationssignalen, die von dem mindestens einen weiteren mobilen Funkkommunikationsgerät mit bestätigter Information über ihre Bereitschaft zur Teilnahme an der Positionsermittlung und Positionsinformationen über eine direkte Funkverbindung zum zu ortenden Funkkommunikationsgerät, oder über eine indirekte Funkverbindung unter Zuhilfenahme des Funknetzwerks an das zu ortende Funkkommunikationsgerät übermittelt werden.

Die Erfindung betrifft weiterhin ein Funkkommunikationssystem mit mindestens einem erfindungsgemäßen Funkkommunikationsgerät und mindestens einem weiteren Funkkommunikationsgerät, welches eingerichtet ist seine Teilnahme an einer Positionsermittlung anzuzeigen.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

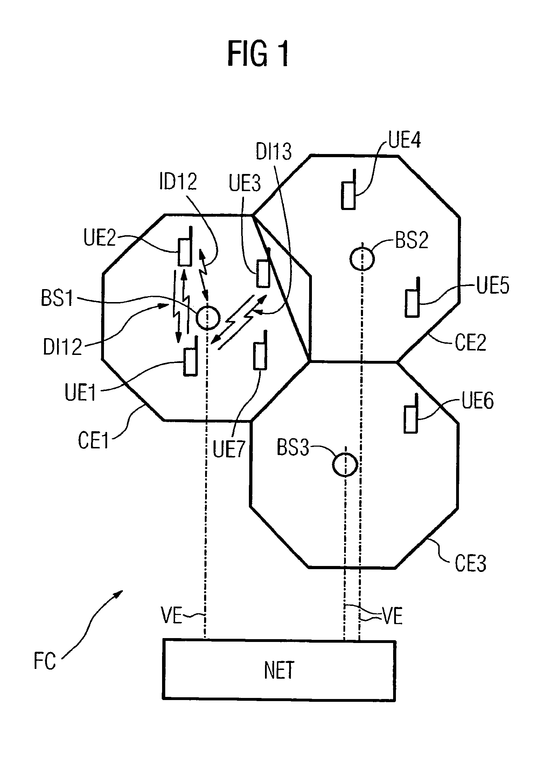

Figur 1 in schematischer Darstellung ein Funkkommunikationssystem mit einer Vielzahl von Funkzellen, in denen sich mobile Funkkommunikationsgeräte aufhalten, wobei zwischen einer Gruppe von Funkkommunikationsgeräten, deren Ortspositionen bekannt sind und einem zu ortenden Funkkommunikationsgerät ein oder mehrere Funkinformationssignale mit Positionsinformationen nach verschiedenen Varianten des erfindungsgemäßen Verfahrens ausgetauscht werden,

Figur 2 in schematischer Darstellung drei Basisstation, für die nach dem RTT-Messverfahren drei Entfernungskreise zur Ermittlung der Position eines zu ortenden Funkkommunikationsgeräts eingezeichnet sind,

Figur 3    in schematischer Darstellung ein RTT-Entfernungskreis für eine Basisstation und zwei Hyperboloiden aufgrund von zwei Laufzeitdifferenzmessungen von Messsignalen zweier Paare von Basisstationen als eine Kombination von RTT-Messmethode und OTDOA-Messmethode, deren gemeinsamer Schnittpunkt die gesuchte Ortsposition eines zu ortenden Funkkommunikationsgeräts angibt,

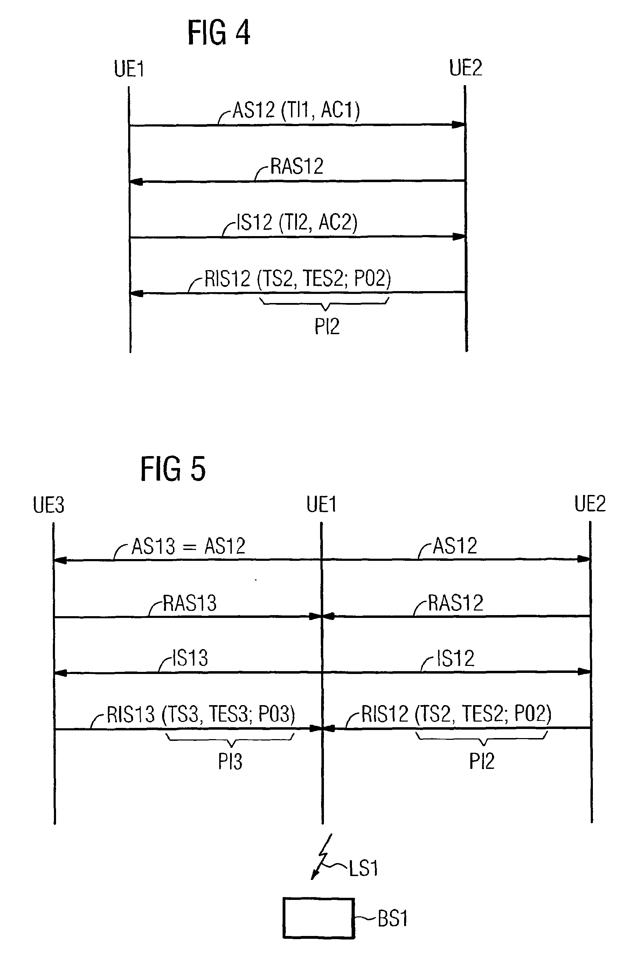

Figur 4    in schematischer Darstellung Funksignalübertragungen auf der Luftschnittstelle zwischen dem zu ortenden, mobilen Funkkommunikationsgerät nach Figur 1 und einem weiteren mobilen Funkkommunikationsgerät, dessen Ortsposition bereits bekannt ist, nach einer ersten Variante des erfindungsgemäßen Verfahrens, und

Figur 5    in schematischer Darstellung Funksignalübertragungen auf den Luftschnittstellen zwischen dem zu ortenden mobilen Funkkommunikationsgerät nach Figur 1 und zwei weiteren mobilen Funkkommunikationsgeräten, deren Ortspositionen bekannt sind, nach einer zweiten Variante des erfindungsgemäßen Verfahrens.

Elemente mit gleicher Funktion und Wirkungsweise sind in den Figuren 1 mit 5 jeweils mit denselben Bezugszeichen versehen.

Figur 1 zeigt in schematischer Darstellung mehrere Funkzellen CE1 mit CE3 eines Funkkommunikationssystems FC, das beispielsweise gemäß dem UMTS-Standard arbeitet. Diese Funkzellen CE1 mit CE3 werden jeweils von Basisstationen BS1 mit BS3 funktechnisch aufgespannt. Dabei bilden die Basisstationen BS1 mit BS3 die Einkoppelpunkte in und die Auskoppelpunkte aus dem Funknetzwerk NET des Funkkommunikationssystems. Diese Übertragungsverbindungen zwischen den Basisstationen BS1 mit BS3 und dem Funknetzwerk NET sind in der Figur 1 jeweils durch strichpunktierte Linien VE angedeutet. In den Funkzellen CE1 mit CE3 halten sich mobile Funkkommunikationsgeräte auf. Beispielsweise befinden sich in der ersten Funkzelle CE1 momentan die Funkkommunikationsgeräte UE1, UE2, UE3 und UE7. Der benachbarten Funkzelle CE2 sind die beiden Funkkommunikationsgeräte UE4, UE5 sowie der dritten Funkzelle CE3, das Funkkommunikationsgerät UE6 zugeordnet. Die Basisstationen BS1 mit BS3 sowie ihre zugehörigen Funkzellen CE1 mit CE3 stehen dabei stellvertretend für eine Vielzahl weiterer Basisstationen und deren aufgespannte Funkzellen des Funkkommunikationssystems FC.

Um nun beispielsweise die Ortsposition PO1 des Funkkommunikationsgeräts UE1 zu ermitteln, können zusätzlich oder unabhängig von bekannten Ortsermittlungsverfahren wie z.B. nach der RTT-Messmethode, der OTDOA-Messmethode, und/oder der GPS-Messmethode ein oder mehrere weitere mobile Funkkommunikationsgeräte, deren Ortspositionen bekannt sind, zur Gerinnung von Positionsinformationen über den Standort des zu ortenden Funkkommunikationsgeräts UE1 herangezogen werden. Hier im Ausführungsbeispiel von Figur 1 sind die Standorte der beiden Funkkommunikationsgeräte UE2, UE3 vorbekannt, die sich in der Umgebung des zu ortenden Funkkommunikationsgeräts UE1 in derselben Funkzelle CE1 aufhalten. Die beiden mobilen Funkkommunikationsgeräte UE2, UE3 kennen ihre Ortsposition z.B. deshalb, weil in ihnen jeweils ein GPS-Modul (Global Positioning System) integriert ist. Die drei Funkkommunikationsgeräte UE1, UE2, UE3 sind vorzugsweise derart ausgebildet, dass sie direkt miteinander über Funk kommunizieren können. Geeignete Übertragungstechniken hierfür sind beispielsweise Bluetooth, WLAN oder sonstige noch in Zukunft zu spezifizierende Direktübertragungstechniken wie z.B. UMTS Direct Mode. Im Einzelnen ist die direkte Funkverbindung zwischen dem zu ortenden Funkkommunikationsgerät UE1 und dem weiteren mobilen Funkkommunikationsgerät UE2 (mit bekanntem Standort) in der Figur 1 mit DI12 bezeichnet. In entsprechender Weise können über eine direkte Funkverbindung DI13 Nachrichtensignale zwischen dem zu ortenden Funkkommunikationsgerät UE1 und dem weiteren mobilen Funkkommunikationsgerät UE3 über deren Luftschnittstelle unmittelbar übermittelt werden.

Zusätzlich oder unabhängig zu Positionsinformationen wie z.B. Standort, Signallaufzeiten, usw., die durch Einbezug der Basisstation BS1 in der Aufenthaltsfunkzelle des zu ortenden Funkkommunikationsgeräts UE1 und/oder der Basisstationen BS2, BS3 in ein oder mehreren Nachbarfunkzellen CE2, CE3 gewonnen werden können, werden jetzt auch Positionsinformationen von weiteren, d.h. fremden Funkkommunikationsgeräten wie z.B. UE2, UE3, die ihre Position kennen, zu Hilfe genommen, um Positionsparameter über das Verhältnis der Ortsposition zwischen dem zu ortenden Funkkommunikationsgerät und ein oder mehreren weiteren Funkkommunikationsgeräten mit bekannten Standorten ermitteln zu können. Hier im Ausführungsbeispiel von Figur 1 halten sich die beiden Funkkommunikationsgeräte UE2, UE3 in der näheren Umgebung des zu ortenden Funkkommunikationsgeräts UE1 auf. Zwischen dem zu ortenden Funkkommunikationsgerät UE1 und den weiteren mobilen Funkkommunikationsgeräten UE2, UE3 kann dabei jeweils die direkte Funkverbindung DI12, DI13 aufgebaut werden. Wie weit diese fremden mobilen Funkkommunikationsgeräte UE2, UE3 maximal vom zu ortenden Funkkommunikationsgerät UE1 entfernt sein können, hängt dabei von der jeweilig verwendeten Funkübertragungstechnologie wie z.B. Bluetooth ab, mit der die direkte Verbindung jeweils aufgebaut wird.

Dasjenige mobile Funkkommunikationsgerät wie z.B. UE1, das seine Ortsposition mithilfe der anderen Funkkommunikationsgeräte wie z.B. UE2, UE3 bestimmen möchte bzw. zumindest die Genauigkeit seiner Positionsberechnung verbessern möchte, sendet in einem ersten Schritt ein allgemeines Anfrage- bzw. Aufforderungssignal an seine Umgebung ab. Dies kann beispielsweise über einen Broadcast-Funkkanal erfolgen, d.h. die Anfrage zur Mitwirkung an der Positionsermittlung richtet sich an alle Funkkommunikationsgeräte in seiner Umgebung und nicht an ein spezielles Funkkommunikationsgerät. Ein fremdes mobiles Funkkommunikationsgerät wie z.B. UE2, dass dieses Anfragesignal empfängt, seine eigene Ortsposition kennt und bereit ist, dem anfragenden Funkkommunikationsgerät zu helfen, kann seine Bereitschaft zur Teilnahme an dem durchzuführenden Positionsermittlungsverfahren dem anfragenden Funkkommunikationsgerät mithilfe eines spezifischen Antwort- bzw. Bestätigungssignals mitteilen. In einem zweiten Schritt kann dann das anfragende Funkkommunikationsgerät Positionsinformationen mithilfe eines Abrufsignals von den fremden Funkkommunikationsgeräten mit den bekannten Standorten anfordern. Diese senden daraufhin entsprechende Positionsinformationen jeweils mithilfe mindestens eines spezifischen, d.h. individuellen Funkinformationssignals bzw. Liefersignals zurück.

Wenn fremde Funkkommunikationsgeräte antworten, können mit den empfangenen Informationen in vorteilhafter Weise Entfernungskreise nach dem RTT-Messverfahren, und/oder Hyperboloiden nach dem OTDOA-Messverfahren ermittelt werden. Diese können dann alleinig oder zusätzlich in die Berechnung der Ortsposition des zu ortenden Funkkommunikationsgerätes eingehen.

Auf diese Weise ist es allein durch Nutzung fremder Funkkommunikationsgeräte ermöglicht, Positionsinformationen zur Positionsbestimmung des jeweilig zu ortenden Funkkommunikationsgeräts zu gewinnen. Im Fall, dass die Position des zu ortenden Funkkommunikationsgeräts mit anderen Messverfahren wie z.B. nach der OTTOA- oder RTT-Methode ermittelt wird, lässt sich eine Präzisierung der Positionsermittlung durch die Nutzung fremder Funkkommunikationsgeräte erreichen, deren Ortsposition bekannt ist. Durch diese zusätzlichen Positioninformationen von weiteren mobilen Funkkonununikatiorisgeräten, deren Standorte bekannt sind, können höhere Anforderungen an die Genauigkeit der Positionsbestimmung erfüllt werden, wie sie z.B. in den strengen FCC-Requirements bzw. -Anforderungen (FCC= Federal Communications Commision) in den USA zur Anwendung kommen. Durch die Kombination mit dem bereits bekannten Ortsermittlungsverfahren wie z.B. nach der OTTOA- und/oder RTT-Methode lässt sich die Ortsposition des zu ortenden Funkkommunikationsgeräts mit verbesserter Genauigkeit ermitteln. Dies erhöht insbesondere die Akzeptanz des erfindungsgemäßen Verfahrens im UMTS-Standard, da dort die OTTOA-Methode und/oder RTT-Methode bereits festgeschrieben sind.

**Beispiel 1:**

Zunächst sendet das zu ortende Funkkommunikationsgerät UE1 von Figur 1, das seine Ortsposition mit der Hilfe ein oder mehrerer fremder Funkkommunikationsgeräte bestimmen will, ein allgemeines Anfragesignal AS12 über seine Luftschnittstelle unmittelbar an seine Umgebung ab. Das Anfragesignal AS12 richtet sich also an alle dort etwaig aufhaltenden Funkkommunikationsgeräte. Insbesondere kann es mithilfe eines sog. Broadcast-Funkkanals abgestrahlt werden. Mit Hilfe des Aufforderungssignal AS12 fragt das zu ortende Funkkommunikationsgerät UE1 an, ob eventuell ein weiteres mobiles Funkkommunikationsgerät in seiner Umgebung ist, dass seine eigene Position kennt und dazu bereit ist, Positionsinformationen an das zu ortende Funkkommunikationsgerät zu liefern, d.h. an einer Positionsermittlung für das Funkkommunikationsgerät UE1 teilzunehmen bzw. daran mitzuwirken. Dieses Anfragesignal AS12 empfängt z.B. das weitere mobile Funkkommunikationsgerät UE2. Dieser und der weitere Signalaustausch zwischen den beiden Funkkommunikationsgeräten UE1, UE2 wird anhand des schematischen Schnittstellendiagramms von Figur 4 erläutert. Im vorliegenden Ausführungsbeispiel kennt das Funkkommunikationsgerät UE2 seine Position P02 und teilt dem zu ortenden Funkkommunikationsgerät UE1 mit Hilfe eines Bestätigungs- bzw. Antwortsignals RAS12 mit, dass es zur Übermittlung von Positionsinformationen bereit ist. Dabei sendet es das Antwortsignal RAS12 über die direkte Funkverbindung DI12 an das zu ortende Funkkommunikationsgerät UE1.

Das Aufforderungssignal AS12 kann im UMTS-Standard beispielsweise LCS_Help_REQ () heißen. Das zugehörige Bestätigungssignal RAS12 kann z.B. den Namen LCS_Help_RES () haben.

In dieser Bestätigungsnachricht RAS12 ist noch nicht die Ortsposition des ersten fremden Funkkommunikationsgeräts UE2 enthalten.

Wenn das anfragende Funkkommunikationsgerät UE1 ein derartiges Bestätigungssignal RAS12 von dem fremden Funkkommunikationsgerät UE2 empfangen hat, sendet es ein Abrufsignal IS12 unmittelbar an seine Umgebung über seine Luftschnittstelle ab. Mit diesem Abrufsignal IS12 fordert es ein oder mehrere Parameter der Positionsinformation des beteiligten, fremden Funkkommunikationsgeräts UE2 an. Dieses Abrufsignal kann im UMTS-Standard beispielsweise den Namen LCS_Info_REQ() haben.

Auf das Anforderungssignal IS12 hin überträgt das erste, fremde Funkkommunikationsgerät UE2 mit Hilfe des Funkinformationssignals RIS12 die gewünschten Positionsinformationen an das anfragende Funkkommunikationsgerät UE1. Es kann vorzugsweise im UMTS-Standard mit dem Namen LCS_Info_RES bezeichnet sein. Im Funkinformationssignal RIS12 sind als Positionsinformationen insbesondere der Zeitpunkt enthalten, zu dem dieses Informationssignal vom jeweiligen fremden Funkkommunikationsgerät abgesendet wird, seine Ortsposition, und diejenige Zeitspanne zwischen dem Empfangszeitpunkt der Abrufnachricht für die Positionsinformation und dem Sendezeitpunkt des Funkinformationssignals zur Übermittlung dieser Positionsinformationen in dem fremden Funkkommunikationsgerät. Im Ausführungsbeispiel von Figur 4 werden im Funkinformationssignal bzw. Liefersignal RIS12 die Parameter TS2, TES2, sowie PO2 übertragen. Der Parameter TS2 bezeichnet den absoluten Zeitpunkt, zu dem das Funkinformationssignal RIS12 vom ersten fremden Funkkommunikationsgerät UE2 über die direkte Funkverbindung DI12 an das anfragende Funkkommunikationsgerät UE1 abgesendete worden ist. Der Parameter TES2 gibt die Zeitspanne bzw. Totzeit zwischen dem Empfang des Abrufsignals IS12 und dem darauffolgenden Absenden des Funkinformationssignals RIS12 in dem ersten fremden Funkkommunikationsgerät UE2 an. Der Parameter PO2 bezeichnet die eigene, momentane Ortsposition des ersten fremden Funkkommunikationsgeräts UE2.

Zusammenfassend betrachtet werden also zwischen dem anfragenden Kommunikationsgerät UE1 und dem ersten weiteren Funkkommunikationsgerät UE2 folgende Nachrichtensignale auf deren Luftschnittstelle ausgetauscht:

    AS12 ()
    RAS12 ()
    IS12 ()
    RIS12 (TS2,TES2,PO2),

wobei zwischen runden Klammern jeweils die mit dem jeweiligen Signal übertragenen Parameter für die Positionsermittlung gesetzt sind. Leere Klammern bedeuten, das keine Parameter mit dem jeweiligen Signal übertragen werden, die der Positionsermittlung dienen. Es sei bemerkt, dass die in Figur 4 gezeigten Parameter in Klammern zu den Signalen AS12 und IS12 Bestandteile weiterer Beispiele sind und unten insbesondere bezüglich Beispiel 2 und 3 noch erläutert werden.

Die übermittelnden Parameter TS2,TES2,PO2 bilden dabei die übermittelte Positionsinformation, die dem anfragenden Funkkommunikationsgerät UE1 erlauben, seine gesuchte Ortsposition in Bezug zur bekannten Ortsposition PO2 des Funkkommunikationsgeräts UE2 zu setzen.

In Verallgemeinerung der Übertragungssignale zwischen einem zu ortenden Funkkommunikationsgerät UEi und einem weiteren Funkkommunikationsgerät UEj, dessen Ortsposition bekannt ist, lässt sich folgende Schreibweise für die ausgetauschten Signale auf deren Luftschnittstelle einführen:

Das zu ortende Funkkommunikationsgerät UEi schickt ein allgemeines Anfragesignal ASij an das weitere Funkkommunikationsgerät UEj. Mit diesem Anfragesignal ASij wird abgeklärt, ob das fremde Funkübertragungsgerät UEj überhaupt autorisiert ist, am Positionsermittlungsverfahren teilzunehmen, und/oder auch gewillt ist, daran teilzunehmen. Im Fall der Bereitschaft zur Teilnahme, sendet das fremde Funkkommunikationsgerät UEj ein Bestätigungssignal RASij an das anfragende Funkkommunikationsgerät UEi zurück. Dieses ordert dann mithilfe eines Anforderungssignals ISij Positionsinformationen vom fremden Funkkommunikationsgerät UEj. Dieses übermittelt daraufhin diese Positionsinformationen in Form von Parametern TSj,TESj,POj in einem Funkinformationssignal RISij an das anfragende Funkkommunikationsgerät UEi. Die übermittelten Parameter haben eine Bedeutung entsprechend den Parametern TS2, TES2, PO2 bei der Signalübertragung zwischen den Funkkommunikationsgeräten UEi, Uej, die speziell für i=1 und j=2 vorstehend erläutert worden ist.

Aufgrund dieser übermittelnden Positionsparameter kann dann das anfragende Funkkommunikationsgerät zu jedem fremden Funkkommunikationsgerät, das antwortet, insbesondere die sogenannte "Round Trip Time" RTT bestimmen. Dies ist die Zeitdifferenz zwischen dem Absendezeitpunkt des Abrufsignals ISij im anfragenden Funkkommunikationsgerät UEi und dem dortigen Empfangszeitpunkt für das Funkinformationssignal RISij mit den darin enthalten Positionsparametern TSj, TESj,POj. Somit kann die Signallaufzeit LZ für den Hin- und Rückweg ermittelt werden, den das Anforderungssignals ISij und das Funkinformationssignal RISij zurücklegen:

$$\text{Formel 1:} \qquad LZ = RTT - TESj$$

Der Zeitparameter TESj bezeichnet dabei die Differenz zwischen dem Empfangszeitpunkt des Abrufsignals ISij im fremden Funkkommunikationsgerät UEj und dem Absendezeitpunkt des Funkinformationssignals RISij (mit den enthaltenen Positionsparametern TSj, TESj, Poj) im fremden Funkkommunikationsgerät UEj. Aufgrund der Signallaufzeit LZ kann dann auf die Entfernung zwischen dem fordernden Funkkommunikationsgerät UEi und dem fremden Funkkommunikationsgerät UEj geschlossen werden. Zur Berechnung des für das RTT-Verfahren typischen Entfernungskreises ist es dabei nicht erforderlich, dass der Sendezeitpunkt TSj des Funkinformationssignals RISij in diesem mitübermittelt wird. Die Übertragung der Positionsparameter TESj,POj genügt hierbei.

Das Abrufsignal ISij des anfragenden Funkkommunikationsgeräts UEi fungiert somit als Messsignal, das beim ersten fremden Funkkommunikationsgerät UEj ein Antwortsignal RISij auslöst, das Messsignalparameter wie z.B. dessen Absendezeitpunkt TSj, die Totzeit TESj zwischen dem Eingang des Anforderungssignals ISij und dem Absenden des Lieferungssignals RISij, sowie die Angabe der bekannten Position POj des weiteren mobilen Funkkommunikationsgeräts UEj enthält.

Wenn mehr als ein fremdes Funkkommunikationsgerät wie z.B. zwei Funkkommunikationsgeräte UEj,UEk auf ein und dasselbe Anfragesignal ASij=ASik geantwortet haben, kann das anfragende Funkkommunikationsgerät UEi zudem zu jedem Paar von fremden Funkkommunikationsgeräten, deren Position bekannt ist, die Zeitdifferenz TDIFF zwischen den Signallaufzeiten ihrer Funkinformationssignale RISij, RISik bestimmen:

$$\text{Formel 2:} \qquad TDIFF = |(TSk-TSj) - TEDIFF|$$

Dabei ist TDIFF die Zeitspanne zwischen den Ankunftszeitpunkten zwischen den beiden Funkinformationssignalen RISij und RISik der beiden fremden Funkkommunikationsgeräte UEj, UEk und zwar gemessen im anfragenden Funkkommunikationsgerät UEi. Er ist immer positiv. Der Zeitparameter TSk bezeichnet die Startzeit des als zweites ankommenden Funkinformationssignals RISik sowie der Zeitparameter TSj die Startzeit des als zuerst ankommenden Funkinformationssignals RISij. Aufgrund der ermittelnden Zeitdifferenz TDIFF zwischen den Signallaufzeiten der Funkinformationssignale je zweier fremder Funkübertragungsgeräte kann dann nach der OTTOA-Berechnungsmethode ein entsprechendes Hyperboloid aufgestellt werden. Dabei ist die Übermittlung der Parameter TESj, TESk nicht erforderlich. Die jeweilige Totzeit zwischen dem Eingang des Abrufsignals ISij, ISik und dem Absendezeitpunkt des zughörigen Funkinformationssignals RISij, RISik beim jeweiligen fremden Funkkommunikationsgerät UEj, UEk ist dabei mit TESj, TESk bezeichnet.

Figur 5 veranschaulicht konkret den Nachrichtenfluss zwischen dem anfragenden Funkkommunikationsgerät UE1 und dem ersten fremden Funkkommunikationsgerät UE2 entsprechend der Figur 4 sowie zusätzlich zwischen dem anfragenden Funkkommunikationsgerät UE1 und dem zweiten fremden Funkkommunikationsgerät UE2. Der Signalfluss zwischen dem anfragenden Funkkommunikationsgerät UE1 und dem zweiten zusätzlichen Funkkommunikationsgerät UE3 folgt dabei entsprechend dem Nachrichtenfluss im Schnittstellendiagramm von Figur 4. So wird im Einzelnen in analoger Weise das allgemeine Anfragesignal AS13=AS12 des anfragenden Funkkommunikationsgerät UE1 vom zweiten fremden Funkkommunikationsgerät UE3 empfangen. Mit diesem wird nachgefragt, ob es dem zweiten fremden Funkkommunikationsgerät UE3 ermöglicht ist, an der Positionsermittlung teilzunehmen. Das zweite fremde Funkkommunikationsgerät überträgt als Antwortsignal auf dieses Anfragesignal AS13 hin ein Bestätigungssignal RAS13. Erst daraufhin fordert das zu ortende Funkkommunikationsgerät UE1 mithilfe eines Abrufsignals IS13 Positionsinformationen vom zweiten fremden Funkkommunikationsgerät UE3 an. Dieses übermittelt mithilfe des Funkinformationssignals RIS13 schließlich einen Satz PI3 von Positionsparametern TS3, TES3, PO3 an das anfragende Funkkommunikationsgerät UE1. Mit diesen beiden Sätzen PI2, PI3 von Positionsparameter ist es dann insbesondere möglich, eine OTDOA-Berechnung, wie sie oben erläutert worden ist, durchzuführen.

Schließlich kann das anfragende Funkkommunikationsgerät in vorteilhafter Weise alle empfangenen und berechneten Positionsparameter mit in seine Positionsberechnungsfunktion einfließen lassen. Dabei definieren die Parameter POj, RTT und TESj bzw. die Parameter POj und LZ nach Anwendung der obigen Formel 1 einen Entfernungskreis nach der RTT-Methode. Die Parameter POj, POk und der Parameter TDIFF definieren nach Anwendung der obigen Formel 2 hingegen einen Hyperpoloiden nach der OTDOA-Methode.

**Beispiel 2:**

Zweckmäßig kann es sein, jeweils eine Zeitspanne festzulegen, wie lange fremde Funkkommunikationsgeräte Zeit haben, auf ein Anfrage- bzw. Aufforderungssignal wie z.B. AS12 zu antworten. Beispielsweise kann als Wartezeit zwischen dem jeweiligen Anfragesignal wie z.B. AS12 von Figur 4 und dem zugehörigen Antwortsignal wie z.B. RAS12 des jeweilig antwortenden fremden Funkkommunikationsgeräts wie z.B. UE2 eine Sekunde vorgegeben werden. Dann braucht ein fremdes Funkkommunikationsgerät nach Ablauf einer solchen Wartezeit nicht mehr antworten, und das jeweilig anfragende Funkkommunikationsgerät wie z.B. UE1 kann nach Ablauf einer solchen Zeitspanne mit den nächsten Schritten fortfahren.

Alternativ kann eine solche Wartezeit auch vom jeweilig anfragenden Kommunikationsgerät frei gewählt werden. Es kann diese Wartezeit als Parameter der jeweiligen Anfragenachricht wie z.B. AS12 sowie Abrufnachricht wie z.B. IS12 mitgeben. Die Anfragenachricht AS12 sowie die Abrufnachricht IS12 enthalten dann diese Wartezeit als zusätzlichen Parameter TI1,TI2. Im Ausführungsbeispiel von Figur 4 ist diese Wartezeit TI1 hinter dem Anfragesignal AS12 in Klammern gesetzt. In entsprechender Weise sitzt die Wartezeit TI2 in Klammern hinter dem Abrufsignal IS12. Die jeweilige Wartezeit fungiert somit als Reaktionszeit, innerhalb der den jeweiligen befragten fremden Funkkommunikationsgerät eine Antwort ermöglicht ist. Dadurch wird weitgehend sichergestellt, das ein zu langes Blockieren der direkten Funkverbindung zwischen den beteiligten Funkkommunikationsgeräten vermieden ist.

Im UMTS-Standard kann das jeweilige Anfragesignal insbesondere die Bezeichnung LCS_HELP_REQ(time1) sowie das jeweilige Abrufsignal die Bezeichnung LCS_INFO_REQ(time2) haben. Dabei entsprechen die Parameter time1 und time2 den Parametern TI1, TI2.

**Beispiel 3:**

Zweckmäßig kann es gegebenenfalls auch sein, zusätzlich oder unabhängig zur Wartezeit eine Mindestgenauigkeit vorzugeben, mit der ein fremdes Funkkommunikationsgerät seine Position angeben kann. Kann ein fremdes Funkkommunikationsgerät eine solche Mindestgenauigkeit bezüglich seiner Positionsangabe nicht liefern, dann wird ihm von vornherein kein Antwortsignal erlaubt. Diese fest eingestellte Mindestgenauigkeit kann beispielsweise zwischen 50 und 100 Metern festgelegt werden.

Alternativ zu einer solch fix eingestellten Mindestgenauigkeit kann es auch vorteilhaft sein, dass das jeweilig anfragende Kommunikationsgerät wie z.B. UE1 eine derartige Mindestgenauigkeit für das jeweilig befragte, fremde Funkkommunikationsgerät wie z.B. UE2 frei wählt und als Parameter im jeweiligen Anfragesignal wie z.B. AS12 an das jeweilig befragte fremde Funkkommunikationsgerät wie z.B. UE2 mitschickt. Im Ausführungsbeispiel von Figur 4 ist dem Fragesignal AS12 eine derartige Mindestgenauigkeit AC1 für das fremde Funkkommunikationsgerät UE2 beigefügt. In entsprechender Weise enthält das Abrufsignal IS12 eine Mindestgenauigkeitsanforderung AC2 für das fremde Funkkommunikationsgerät UE2.

Alternativ können hierbei die Zeitparameter wie z.B. TI1,TI2 als Wartezeit für die Antwortsignale RAS12, RIS12 weggelassen werden.

Damit das anfragende Funkkommunikationsgerät wie hier UE1 die Genauigkeit der Positionsangaben des jeweilig fremden Funkkommunikationsgeräts wie z.B. hier UE2 erkennt, kann es gegebenenfalls zweckmäßig sein, zusätzlich oder unabhängig von den vorstehend genannten Genauigkeitsparametern in den Anfragesignalen einen entsprechenden Genauigkeitsparameter im jeweiligen Antwortsignal aufzunehmen. Insbesondere ist es vorteilhaft, im jeweiligen, eigentlichen Lieferungssignal bzw. Funkinformationssignal wie z.B. RIS12 eine Genauigkeitsangabe hinzuzufügen. Das anfragende Funkkommunikationsgerät UE1 kann dann diese Zusatzinformationen bei seinen Berechnungen mit berücksichtigen. Beispielsweise ist es ihm dadurch ermöglicht, genauere Positionsangaben in seinen Berechnungen stärker zu gewichten. Weiterhin ist es ihm ermöglicht, dass es nur die genauesten Angaben bei seinen Positionsermittlungen berücksichtigt, wenn es sehr viele Antwortsignale von einer Vielzahl von fremden Funkkommunikationsgeräten erhält. Allgemein ausgedrückt enthält dann die zweite Antwortnachricht, d.h. das Funkinformationssignal RISij die Parameter TSj, TESj, POj, ACj. Acj bezeichnet dabei die Genauigkeit, mit der die anderen Parameter geliefert werden.

Im UMTS-Standard kann das jeweilige Anfragesignal insbesondere die Bezeichnung LCS_HELP_REQ(min_accuracy1, time1) sowie das jeweilige Abrufsignal die Bezeichnung LCS_INFO_REQ(min_accuracy2, time2) haben. Dabei entsprechen die Parameter min_accuracy1 und min_accuracy2 den Parametern AC1, AC2.

**Beispiel 4:**

In Abwandlung zu den vorhergehenden Beispielen werden hier Parameter, die bisher in dem zweiten Antwortsignal, d.h. dem eigentlichen Liefersignal, übermittelt werden, schon im ersten Antwortsignal, d.h. dem Bestätigungssignal, mit übermittelt. Der Nachrichtenfluss zwischen dem anfragenden und dem antwortenden Funkkommunikationsgerät kann insbesondere folgendermaßen gewählt sein:

ASij(ACi,TIi)
RASij(TSj,POj,ACj)
ISij(ACj,TIj)
RISij(TESj) oder RISij(TESj,POj,ACj)

Werden Bestätigungssignale wie z.B. RASij, RASik von mindestens zwei fremden Funkkommunikationsgeräten wie z.B. Uej, Uek abgegeben, so kann bereits aufgrund dieser ersten Antwortsignale ein Hyperboloid nach der OTTOA-Methode ermittelt werden. Aufgrund eines zweiten Antwortsignals in Form des Liefersignals RISij kann zumindest ein zusätzlicher Entfernungskreis nach der RTT-Methode berechnet werden.

Gegebenenfalls kann es bereits auch ausreichend sein, dass die letzten beiden Nachrichtensignale Isij, RISij gar nicht mehr ausgetauscht werden. Für den Fall, dass mindestens zwei fremde Funkkommunikationsgeräte antworten, kann nämlich alleine mit den ersten beiden Nachrichten Asij, RASij eine OTDOA-Berechnung durchgeführt werden. Denn dafür ist ja der Parameter TESj nicht erforderlich. Eine RTT-Berechnung wird dann nicht durchgeführt.

In Verallgemeinerung können die insgesamt zwischen dem anfragenden Funkkommunikationsgerät und dem antwortenden Funkkommunikationsgerät ausgetauschten Parameter beliebig auf die beiden übermittelten Antwortnachrichten verteilt werden. Dies kann soweit gehen, dass alle denkbaren Positionsparameter bereits mit den beiden ersten Nachrichten, nämlich dem Anfragesignal ASij und dem dazugehörigen Bestätigungssignal RASij übermittelt werden. Parameter im Anfragesignal ASij sind dabei die Mindestgenauigkeit ACi sowie die Wartezeit TIi, die von dem anfragenden Funkkommunikationsgerät als Bedingung gesetzt sind. Positionsparameter im zugehörigen Antwortsignal RASij sind der Absendezeitpunkt TSj, die Totzeit TESj bis zum Absenden des Antwortsignals, die Ortsposition POj des befragten fremden Funkkommunikationsgeräts UEj und/oder die Genauigkeit, mit der die Position angegeben werden kann.

Im UMTS-Standard kann ein kompletter Nachrichtenfluss zwischen einem anfragenden und einem antwortenden Funkkommunikationsgerät insbesondere folgendermaßen bezeichnet sein:

    LCS_HELP_REQ(min_accuracy, time1)
    LCS_HELP_RES(timestamp, position, accuracy)
    LCS_INFO_REQ(min_accuracy, time2)
    LCS_INFO_RES(rx_tx_diff) oder LCS_INFO_RES(rx_tx_diff, position, accuracy)

Dabei bezeichnet der Parameter min_accuracy die geforderte Genauigkeit, der Parameter timestamp den Absendezeitpunkt, position die Position, die Parameter time1, time2 die Wartezeit, der Parameter rx_tx_diff entspricht dem Parameter TESij (=Totzeit).

**Beispiel 5:**

Insbesondere können die beiden letzten Nachrichtensignale ISij, RISij im UMTS-Standard mithilfe von vorhandenen Nachrichten wie z.B. "MEASUREMENT CONTROL" bzw. "MEASUREMENT CONTROL RESPONSE" übermittelt werden. Dazu werden diese vorhanden Nachrichten entsprechend erweitert.

Vorzugsweisweise kann die Ortsposition des zu ortenden Funkkommunikationsgeräts mithilfe einer Auswerte- und Berechnungseinheit aufgrund der übermittelten Positionsparameter im zu ortenden Funkkommunikationsgerät selbst berechnet werden. Alternativ dazu kann die Berechnung auch mittels einer entsprechenden Berechnungseinheit im Funknetzwerk ermittelt werden.

**Beispiel 6:**

In diesem Beispiel ist die Positionsbestimmung jetzt insbesondere netzwerkbasiert, d.h. die Positionsermittlung wird im Funknetzwerk NET geführt. Dazu werden in entsprechender Weise die Anfrage- und Antwortsignale entsprechend den vorhergehenden Beispielen zwischen dem anfragenden Funkkommunikationsgerät und mindestens einem fremden Funkkommunikationsgerät übermittelt. Nur wird jetzt das anfragende Funkkommunikationsgerät wie z.B. UE1 nach Erhalt der zusätzlichen Positionsinformationen von dem fremden Funkkommunikationsgeräten wie z.B. UE2 nach Ablauf der gesetzten Wartezeit wie z.B. TI2 die empfangenen und berechneten Parameter zum Netzwerk wie z.B. NET signalisieren, da die Positionsberechnungsfunktion im Netzwerk untergebracht ist. Dazu übermittelt es ein entsprechendes Signal über seine Luftschnittstelle an die Basisstation BS1 in seiner momentanen Aufenthaltsfunkzelle. Im Ausführungsbeispiel von Figur 5 leitet das anfragende Funkkommunikationsgerät UE1 die Positionsparameter an die Basisstation BS1 und diese an mindestens eine Netzwerkkomponente weiter.

Zweckmäßig kann es sein, zur Übermittlung über die Luftschnittstelle wie z.B. LS1 neue Nachrichtensignale mit entsprechenden Parametern zu definieren. Dies sind vorzugsweise die Parameter:
LCS_Parameter(K, POj, RTT, TESj)bzw. LCS_Paramter(K, POj, LZ) sowie LCS_Parameter(H, POj, POk, TDIFF), wobei der erste Parameter K oder H angibt, dass diese Parameter entweder einen Entfernungskreis K oder einen Hyperpoloiden H definieren. Es ist natürlich auch möglich, hier zwei unterschiedliche Nachrichten separat voneinander zu definieren.

Das zu ortende Funkkommunikationsgerät sowie die fremden Funkkommunikationsgeräte können insbesondere Mobilfunkgeräte sein. Selbstverständlich kann das erfindungsgemäße Positionsermittlungsprinzip auf auch sonstige mobile Endgeräte übertragen werden.

Gegebenenfalls kann es auch zweckmäßig sein, das jeweilige Anfragesignal, das Bestätigungs- bzw. Bereitschaftssignal, das Abrufsignal sowie das Übermittlungssignal zur Gewinnung der Positionsinformationen nicht auf direktem Funkverbindungsweg sondern unter Zwischenschaltung der jeweils zuständigen Basisstation sowie der daran angekoppelten Komponenten des Funknetzwerkes zwischen dem jeweilig zu ortenden Funkkommunikationsgerät und den fremden Funkkommunikationsgeräten zu übertragen.

**Patentansprüche**

1. Verfahren zur Ermittlung der Ortsposition (PO1) mindestens eines zu ortenden mobilen Funkkommunikationsgeräts (UE1) in mindestens einer Funkzelle (CE1) eines Funkkommunikationssystems (FC), wobei

in einem ersten Schritt von dem zu ortenden Funkkommunikationsgerät (UE1) ein Anfragesignal (AS12) abgestrahlt wird, mit dem ein oder mehrere weitere mobile Funkkommunikationsgeräte (UE2) in seiner Umgebung aufgefordert werden, ihm zunächst ihre Bereitschaft zur Teilnahme an einer Positionsermittlung jeweils durch Zurücksenden eines spezifischen Bestätigungssignals (RAS12) anzuzeigen,

erst in einem nachfolgenden, zweiten Schritt nach dem Empfang des jeweiligen Bestätigungssignals (RAS12) von dem zu ortenden Funkkommunikationsgerät (UE1) ein Abrufsignal (IS12) zum Abrufen von Positionsinformationen (PI2) jeweils an dasjenige, weitere Funkkommunikationsgerät (UE2) übertragen wird, von dem dessen Bereitschaft zur Teilnahme an der Positionsermittlung auf das Anfragesignal (AS12) hin mit einem spezifischen Bestätigungssignal (RAS12) angezeigt worden ist,

von dem mindestens einem weiteren mobilen Funkkommunikationsgerät (UE2), das sich in derselben oder einer anderen Funkzelle (CE1) wie das zu ortende Funkkommunikationsgerät (UE1) aufhält und dem seine aktuelle Ortsposition (P02) ihm selbst oder dem Funknetzwerk (NET) des Funkkommunikationssystems (FC) bekannt ist, Positionsinformationen (PI2) mittels eines oder mehrerer Funkinformationssignale (RIS12) über eine direkte Funkverbindung (DI12) zum zu ortenden Funkkommunikationsgerät (UE1), oder über eine indirekte Funkverbindung (ID12) unter Zuhilfenahme des Funknetzwerks (NET) an das zu ortende Funkkommunikationsgerät (UE1) übermittelt werden.

2. Verfahren nach Anspruch 1,
   **dadurch gekennzeichnet,**
   **dass** als Anfragesignal (AS12) ein Broadcast-Funksignal verwendet wird.

3. Verfahren nach einem der Ansprüche 1 mit 2,
   **dadurch gekennzeichnet, dass** dem jeweiligen, weiteren mobilen Funkkommunikationsgerät (UE2) ein Antwortzeitraum (TI1) vorgegeben wird, innerhalb dem es nach Empfang des jeweiligen Anfragesignals (AS12) seine Bereitschaft zur Teilnahme an der Positionsermittlung mit Hilfe eines spezifischen Bestätigungssignals (RAS12) dem zu ortenden Funkkommunikationsgerät (UE1) anzeigen kann.

4. Verfahren nach einem der Ansprüche 1 mit 3,
   **dadurch gekennzeichnet,**
   **dass** eine Mindestgenauigkeit (AC1) für die Ortsposition (P02) des jeweiligen, weiteren mobilen Funkkommunikationsgerät (UE2) als Voraussetzung dafür vorgegeben wird, dass ihm auf das jeweilige Anfragesignal (AS12) das Absenden eines spezifischen Bestätigungssignals (RAS12) ermöglicht ist.

5. Verfahren nach einem der vorhergehenden Ansprüche 1 mit 4,
   **dadurch gekennzeichnet,**
   **dass** als ein Positionsparameter der übermittelten Positionsinformation (PI2) die Zeitdifferenz (TES2) zwischen dem Empfangszeitpunkt des Anfragesignals (IS12) und dem Absendezeitpunkt (TS2) des Funkinformationssignals (RIS12) in diesem Funkinformationssignal (RIS12) übermittelt wird.

6. Verfahren nach Anspruch 5,
   **dadurch gekennzeichnet,**
   **dass** von dem jeweiligen, weiteren mobilen Funkkommunikationsgerät (UE2) als Positionsparameter der übermittelten Positionsinformation seine aktuelle Ortsposition (P02), und/oder der Absendezeitpunkt (TS2) seines Funkinformationssignals (RIS12) an das zu ortende Funkkommunikationsgerät (UE1) übermittelt werden.

7. Verfahren nach einem der vorhergehenden Ansprüche,
   **dadurch gekennzeichnet,**
   **dass** die Positionsinformationen (PI2), die mit Hilfe des jeweiligen Funkinformationssignals (RIS12) an das zu ortende Funkkommunikationsgerät (UE1) von dem mindestens einen weiteren mobilen Funkkommunikationsgerät (UE2) übermittelt werden, als Zusatzinformation zu einer RTT-, einer OTDOA-, und/oder zu einer GPS-Positionsmessung des zu ortenden Funkkommunikationsgeräts (UE1) herangezogen werden.

8. Verfahren nach einem der vorhergehenden Ansprüche,
   **dadurch gekennzeichnet,**

**dass** die übermittelten Positionsinformationen (PI2) im zu ortenden Funkkommunikationsgerät (UE1) zur Berechnung seiner Ortsposition (P02) herangezogen werden.

9. Verfahren nach einem der Ansprüche 1 mit 8,
   **dadurch gekennzeichnet,**
   **dass** die übermittelten Positionsinformationen (PI2) von dem zu ortenden Funkkommunikationsgerät (UE1) über seine Luftschnittstelle an eine Positionsermittlungseinheit im Funknetzwerk (NET) zur Berechnung seiner Ortsposition (P02) übertragen werden.

10. Funkkommunikationsgerät (UE1) mit mindestens einer Abfrageeinheit zum Anfordern von Information über eine Bereitschaft von mindestens einem weiteren mobilen Funkkommunikationsgerät (UE2) zur Teilnahme an einer Positionsermittlung durch Zurücksenden eines Bestätigungssignals (RAS12) und zum Anfordern von Positionsinformationen (PI2) von mindestens einem weiteren mobilen Funkkommunikationsgerät (UE2), das sich in derselben oder einer anderen Funkzelle (CE1) eines Funkkommunikationssystems (FC) aufhält und dem seine aktuelle Ortsposition (P02) ihm selbst oder dem Funknetzwerk (NET) des Funkkommunikationssystems bekannt ist, und mit einer Empfangseinheit zum Empfang und Auswerten von dem Bestätigungssignal (RAS12) und von ein oder mehreren Funkinformationssignalen (RIS12), die von dem mindestens einen weiteren mobilen Funkkommunikationsgerät (UE2) mit bestätigter Information über ihre Bereitschaft zur Teilnahme an der Positionsermittlung und Positionsinformationen (PI2) über eine direkte Funkverbindung (DI12) zum zu ortenden Funkkommunikationsgerät (UE1), oder über eine indirekte Funkverbindung (ID12) unter Zuhilfenahme des Funknetzwerks (NET) an das zu ortende Funkkommunikationsgerät (UE1) übermittelt werden.

11. Funkkommunikationssystem (FC) mit mindestens einem Funkkommunikationsgerät (UE1) nach Anspruch 10 und mindestens einem weiteren Funkkommunikationsgerät (UE2), welches eingerichtet ist seine Teilnahme an einer Positionsermittlung anzuzeigen.

**Claims**

1. Method for ascertaining the local position (P01) of at least one mobile radio communication appliance (UE1) that is to be located in at least one radio cell (CE1) of a radio communication system (FC),
   wherein
   a first step involves the radio communication appliance (UE1) that is to be located emitting a request signal (AS12) which is used to ask one or more further mobile radio communication appliances (UE2) in its surroundings to first of all provide it with an indication of their readiness to participate in position finding by each returning a specific confirmation signal (RAS12),
   a subsequent, second step after reception of the respective confirmation signal (RAS12) is the first to involve the radio communication appliance (UE1) that is to be located transmitting a retrieval signal (IS12) for retrieving position information (PI2) in each case to that further radio communication appliance (UE2) which has indicated its readiness to participate in the position finding by means of a specific confirmation signal (RAS12) in response to the request signal (AS12),
   the at least one further mobile radio communication appliance (UE2), which is in the same or a different radio cell (CE1) as/from the radio communication appliance (UE1) that is to be located and for which its current local position (P02) is known to itself or to the radio network (NET) of the radio communication system (FC), transmits position information (PI2) by means of one or more radio information signals (RIS12) to the radio communication appliance (UE1) that is to be located via a direct radio link (DI12) to the radio communication appliance (UE1) that is to be located or via an indirect radio link (ID12) using the radio network (NET).

2. Method according to Claim 1,
   **characterized**
   **in that** the request signal (AS12) used is a broadcast radio signal.

3. Method according to either of Claims 1 and 2,
   **characterized**
   **in that** the respective, further mobile radio communication appliance (UE2) has a response period (TI1) prescribed for it, within which it can indicate its readiness to participate in the position finding to the mobile radio communication appliance (UE1) that is to be located using a specific confirmation signal (RAS12) after reception of the respective request signal (AS12).

**4.** Method according to one of Claims 1 to 3,
**characterized**
**in that** a minimum accuracy (AC1) for the local position (P02) of the respective, further mobile radio communication appliance (UE2) is prescribed as a prerequisite for said radio communication appliance being able to send a specific confirmation signal (RAS12) in response to the respective request signal (AS12).

**5.** Method according to one of the preceding Claims 1 to 4,
**characterized**
**in that** the time difference (TES2) between the reception time for the request signal (IS12) and the sending time (TS2) for the radio information signal (RIS12) is transmitted in this radio information signal (RIS12) as a position parameter for the transmitted position information (PI2).

**6.** Method according to Claim 5,
**characterized**
**in that** the respective, further mobile radio communication appliance (UE2) transmits its current local position (P02) and/or the sending time (TS2) for its radio information signal (RIS12) to the radio communication appliance (UE1) that is to be located as position parameters for the transmitted position information.

**7.** Method according to one of the preceding claims,
**characterized**
**in that** the position information (PI2) which is transmitted to the radio communication appliance (UE1) that is to be located from the at least one further mobile radio communication appliance (UE2) using the respective radio information signal (RIS12) is used as supplementary information for an RTT, OTDOA and/or GPS position measurement of the radio communication appliance (UE1) that is to be located.

**8.** Method according to one of the preceding claims,
**characterized**
**in that** the transmitted position information (PI2) is used in the radio communication appliance (UE1) that is to be located in order to calculate its local position (P02).

**9.** Method according to one of Claims 1 to 8,
**characterized**
**in that** the transmitted position information (PI2) is transmitted to a position finding unit in the radio network (NET) by the radio communication appliance (UE1) that is to be located via its air interface in order to calculate its local position (P02).

**10.** Radio communication appliance (UE1) having at least one request unit for requesting information about a readiness of at least one further mobile radio communication appliance (UE2) to participate in position finding by returning a confirmation signal (RAS12) and for requesting position information (PI2) from at least one further mobile radio communication appliance (UE2), which is in the same or a different radio cell (CE1) of a radio communication system (FC) and for which its current local position (P02) is known to itself or to the radio network (NET) of the radio communication system, and having a reception unit for receiving and evaluating the confirmation signal (RAS12) and one or more radio information signals (RIS12) which are transmitted by the at least one further mobile radio communication appliance (UE2) with confirmed information about their readiness to participate in the position finding and position information (PI2) to the radio communication appliance (UE1) that is to be located via a direct radio link (DI12) to the radio communication appliance (UE1) that is to be located or via an indirect radio link (ID12) using the radio network (NET).

**11.** Radio communication system (FC) having at least one radio communication appliance (UE1) according to Claim 10 and at least one further radio communication appliance (UE2) which is set up to indicate its participation in position finding.

**Revendications**

**1.** Procédé de détermination de la position spatiale (PO1) d'au moins un appareil de communication radio mobile (UE1) à localiser dans au moins une cellule radio (CE1) d'un système de communication radio (FC), dans lequel, lors d'une première étape un signal d'interrogation (AS12) est émis par l'appareil de communication radio à localiser (UE1), signal d'interrogation au moyen duquel un ou plusieurs autres appareils de communication radio mobiles (UE2) sont interrogés dans son environnement afin d'indiquer ensuite son aptitude à participer à une détermination de position en renvoyant respectivement un signal d'accusé de réception spécifique (RAS12),

lors d'une seconde étape suivante, après réception du signal d'accusé de réception spécifique (RAS12) en provenance de l'appareil de communication radio à localiser (UE1), un signal d'interrogation (IS12) est tout d'abord transmis afin de demander des informations de position (PI2) respectivement à celui des autres appareils de communication radio (UE2) dont l'aptitude à participer à la détermination de position a été indiquée sur le signal d'interrogation (AS12) au moyen d'un signal d'accusé de réception spécifique (RAS12),

des informations de position (PI2) sont transmises par l'au moins un autre appareil de communication radio mobile (UE2) qui se trouve dans la même cellule radio ou dans une autre cellule radio (CE1) que celle de l'appareil de communication radio à localiser (UE1) et dont la position spatiale instantanée (P02) est connue de lui-même ou du réseau radio (NET) du système de communication radio (FC), au moyen d'un ou plusieurs signaux d'information radio (RIS12) par l'intermédiaire d'une liaison radio directe (DI12), à l'appareil de communication radio à localiser (UE1), ou par l'intermédiaire d'une liaison radio indirecte (ID12), à l'aide du réseau radio (NET) à l'appareil de communication radio à localiser (UE1).

2. Procédé selon la revendication 1, **caractérisé en ce qu'**un signal radio de diffusion est utilisé en tant que signal d'interrogation (AS12).

3. Procédé selon l'une quelconque des revendications 1 et 2, **caractérisé en ce qu'**un intervalle de temps de réponse (TI1) est défini pour l'autre appareil de communication mobile (UE2) respectif, intervalle de temps à l'intérieur duquel son aptitude à participer à la détermination de position à l'aide d'un signal d'accusé de réception spécifique (RAS12) peut être indiquée à l'appareil de communication radio à localiser (UE1) après réception du signal d'interrogation respectif (AS12).

4. Procédé selon l'une quelconque des revendications 1 à 3, **caractérisé en ce qu'**une précision minimale (AC1) de la position spatiale (P02) de l'autre appareil de communication radio mobile (UE2) est définie en tant que condition préalable pour qu'un signal d'accusé de réception spécifique (RAS12) puisse lui être envoyé en réponse au signal d'interrogation respectif (AS12).

5. Procédé selon l'une quelconque des revendications 1 à 4, **caractérisé en ce qu'**en tant que paramètre de position de l'information de position (PI2) transmise, la différence de temps (TES2) entre l'instant de réception du signal d'interrogation (IS12) et l'instant d'émission (TS2) du signal d'information radio (RIS12) contenu est transmise dans ledit signal d'information radio (RIS12).

6. Procédé selon la revendication 5, **caractérisé en ce que** la position spatiale (P02) instantanée et/ou l'instant d'émission (TS2) de son signal d'information radio (RIS12) sont transmis à l'appareil de communication radio à localiser (UE1) par l'autre appareil de communication radio mobile (UE2) respectif en tant que paramètre de position.

7. Procédé selon l'une quelconque des revendications précédentes, **caractérisé en ce que** les informations de position (PI2) qui sont transmises à l'aide du signal d'information radio respectif (RIS12) à l'appareil de communication radio à localiser (UE1) par l'au moins un autre appareil de communication radio mobile (UE2) sont utilisées en tant qu'information complémentaire d'une mesure de position RTT, d'une mesure de position OTDOA et/ou d'une mesure de position GPS de l'appareil de communication radio à localiser (UE1).

8. Procédé selon l'une quelconque des revendications précédentes, **caractérisé en ce que** les informations de position (PI2) transmises sont utilisées dans l'appareil de communication radio à localiser (UE1) pour calculer sa position spatiale (P02).

9. Procédé selon l'une quelconque des revendications 1 à 8, **caractérisé en ce que** les informations de position transmises (PI2) sont transmises par l'appareil de communication radio à localiser (UE1) par l'intermédiaire de son interface radio à une unité de détermination de position du réseau radio (NET) pour le calcul de sa position spatiale (P02).

10. Appareil de communication radio (UE1) comportant au moins une unité d'interrogation destinée à demander des informations concernant une aptitude d'au moins un autre appareil de communication radio mobile (UE2) à participer à une détermination de position en renvoyant un signal d'accusé de réception (RAS12) et à demander des informations de position (PI2) d'au moins un autre appareil de communication radio mobile (UE2) qui se trouve dans la même cellule radio ou dans une autre cellule radio (CE1) d'un système de communication radio (FC), et dont la position spatiale instantanée (P02) est connue de lui-même ou du réseau radio (NET) du système de communication radio, et comportant une unité de réception destinée à recevoir et à évaluer le signal d'accusé de réception (RAS12) et un ou plusieurs signaux d'information radio (RIS12) qui sont transmis à l'appareil de communication radio à localiser (UE1) par au moins un autre appareil de communication radio mobile (UE2) contenant une information validée concernant leur aptitude à participer à la détermination de position et des informations de position (PI2) par l'intermédiaire d'une liaison radio directe (DI12) avec l'appareil de communication radio à localiser (UE1), ou par l'intermédiaire d'une liaison radio indirecte (ID12) à l'aide du réseau radio (NET).

11. Système de communication radio (FC) comprenant au moins un appareil de communication radio (UE1) selon la revendication 10 et au moins un autre appareil de communication radio (UE2), qui est conçu pour indiquer sa participation à une détermination de position.

# FIG 1

# FIG 2

# FIG 3

## FIG 4

UE1                                                UE2

AS12 (TI1, AC1)

RAS12

IS12 (TI2, AC2)

RIS12 (TS2, TES2; PO2)

PI2

## FIG 5

UE3                        UE1                        UE2

AS13 = AS12                                AS12

RAS13                                RAS12

IS13                                IS12

RIS13 (TS3, TES3; PO3)            RIS12 (TS2, TES2; PO2)

PI3                                PI2

LS1

BS1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02078382 A1

- EP 1148754 A2

**In der Beschreibung aufgeführte Nicht-Patentliteratur**

- Introduction of LCS QoS Class. *Vodafone UK, TDoc S2-032977,* 1-27

- *3GPP TSG-SA2 Meeting 34,* 18. August 2003